# EUROPÄISCHE PATENTANMELDUNG

(11) **EP 2 918 797 A1**
(43) Veröffentlichungstag der Anmeldung: **16.09.2015**
(21) Anmeldenummer: 14159055.4
(22) Anmeldetag: 12.03.2014
(51) Int. Cl.: F01K 23/10

(54) **Verfahren zum Betreiben einer Dampfkraftanlage**

(71) Anmelder: Siemens Aktiengesellschaft, 80333 München (DE)
(72) Erfinder: Havemann, Jürgen, 45479 Mülheim an der Ruhr (DE); Heue, Matthias, 44879 Bochum (DE); Korkmaz, Özgür, 45149 Essen (DE); Lötters, Heinz, 47475 Kamp-Lintfort (DE); Riemann, Stefan, 41564 Kaarst (DE); Zimmer, Gerta, 45468 Mülheim an der Ruhr (DE)

(57) **Zusammenfassung**

Die Erfindung betrifft ein Verfahren zum Betreiben einer Dampfkraftanlage, wobei die Dampfkraftanlage (1) einen Dampferzeuger (2) mit einer Trommel (4) und eine Dampfturbine (10) aufweist, wobei hinter der Trommel (4) eine Trommel-Armatur (6) angeordnet ist, wobei die Dampfturbine (10) an der Frequenzstützung bzw. Frequenzregelung beteiligt wird, indem in der Trommel (4) Energie gespeichert wird durch eine entsprechende Regelung der Trommel-Armatur (6).

## Beschreibung

Die Erfindung betrifft ein Verfahren zum Betreiben einer Dampfkraftanlage umfassend einen Dampferzeuger, in der eine Trommel-Armatur hinter einer Trommel angeordnet wird, wobei ein aus der Trommel ausströmender Dampf in einer Dampfleitung, in der die Trommel-Armatur angeordnet wird, einer Dampfturbine zugeführt wird.

Des Weiteren betrifft die Erfindung eine Dampfkraftanlage umfassend einen Dampferzeuger, in der eine Trommel-Armatur zum Regeln des Drucks in einer Trommel angeordnet ist.

Dampfkraftanlagen umfassen im Wesentlichen einen Dampferzeuger, der mit unterschiedlichen Mitteln befeuert werden kann. Beispielsweise kann der Dampferzeuger über die heißen Abgase einer Gasturbine befeuert werden. Ebenso kann ein Dampferzeuger über fossile Brennstoffe befeuert werden.

Der im Dampferzeuger erzeugte Dampf wird über geeignete Dampfleitungen zu einer Dampfturbine geführt, wobei in der Dampfturbine die thermische Energie des Dampfes in Rotationsenergie des Rotors umgewandelt wird. Der Rotor treibt einen Generator an, wodurch schließlich die Rotationsenergie des Rotors in elektrische Energie umgewandelt wird. Die Soll-Rotationsfrequenz des Rotors liegt hierbei bei 50 Hz bzw. 60 Hz. Es sind auch andere Frequenzen bekannt. Jedenfalls muss die vorgenannte Soll-Rotationsfrequenz während des Betriebes möglichst konstant gehalten werden. An den elektrischen Generator ist eine elektrische Last angeschlossen, was in der Regel ein elektrisches Verbrauchernetz ist. Durch unterschiedliche Belastungen im Verbrauchernetz ändert sich die elektrische Lastanforderung an den Generator. Wird die Leistungsabgabe des Generators konstant gehalten führt das zu einer Änderung der Drehzahl und damit letztendlich zu einer Änderung der Netzfrequenz. Wird zu viel Leistung abgegeben steigt die Netzfrequenz, wird zu wenig Leistung abgegeben sinkt die Netzfrequenz. Daher muss die Dampfzufuhr zur Dampfturbine geregelt werden, damit schlussendlich die Netzfrequenz auf einen konstanten Wert ausgeregelt werden kann. Daher sind in der Dampfleitung Dampfregelventile angeordnet, die den Dampfdurchfluss durch die Dampfleitung zur Dampfturbine regeln. Darüber hinaus ist ein Schnellschlussventil in der Dampfleitung eingebaut, das in einem Störfall schlagartig die Dampfzufuhr zur Dampfturbine unterbricht.

Sollte sich die Netzfrequenz in Folge einer Lastabschaltung im elektrischen Verbrauchernetz erhöhen, so sendet die Leittechnik des Dampfkraftwerks ein Signal an das Regelventil, was schließlich ein wenig zufährt und die Dampfzufuhr verringert.

Sollte sich jedoch die elektrische Last im elektrischen Verbrauchernetz erhöhen, so muss durch ein Öffnen der Regelventile gegengesteuert werden, um eine erhöhte Dampfzufuhr zu erreichen.

In GuD-Kraftwerken, bei der die Gasturbine und die Dampfturbine miteinander kombiniert für die elektrische Energieversorgung eingesetzt werden, wurde die Dampfturbine bisher nicht an der Frequenzstützung bzw. Frequenzregelung beteiligt. Dies wurde von der Gasturbine übernommen, die vergleichsweise schnell auf Änderungen der elektrischen Lasten im Verbrauchernetz reagieren kann. Allerdings kann durch die Flexibilisierung des Strommarktes es erforderlich erscheinen, dass auch die Dampfturbine an der Frequenzstützung bzw. Frequenzregelung zu beteiligen ist.

Aufgabe der Erfindung ist es daher, ein Verfahren zum Betreiben einer Dampfkraftanlage anzugeben, bei der die Dampfturbine an der Frequenzstützung bzw. Frequenzregelung beteiligt werden kann.

Gelöst wird diese Aufgabe durch ein Verfahren zum Betreiben einer Dampfkraftanlage umfassend einen Dampferzeuger mit einer Trommel-Armatur und einer Trommel, wobei ein aus der Trommel ausströmender Dampf in einer Dampfleitung, in der die Trommel-Armatur angeordnet wird, einer Dampfturbine zugeführt wird, wobei die Trommel-Armatur zum Regeln ausgebildet und im Dampferzeuger nach der Trommel angeordnet wird.

Mit der Erfindung wird somit vorgeschlagen, die Dampftrommel im Dampferzeuger zur Frequenzstützung bzw. Frequenzregelung einzusetzen. Daher wird vorgeschlagen, in der Dampftrommel Energie einzuspeichern. Dazu wird hinter der Trommel eine Trommel-Armatur angeordnet, über die der Druck der entsprechenden Trommel geregelt werden kann.

Vorteilhafte Weiterbildungen sind in den Unteransprüchen angegeben.

In einer vorteilhaften Weiterbildung wird ein Generator an die Dampfturbine angeschlossen, wobei der Generator elektrische Energie mit einer Netzfrequenz erzeugt, wobei die Dampfturbine bei komplett geöffneter Dampf-Armatur betrieben wird, wobei die Trommel-Armatur weiter geöffnet wird, sofern die Netzfrequenz sinkt. Vorteilhafterweise wird dann der DruckSollwert der Druck-Regelung verringert, wenn die Netzfrequenz sinkt. Weiterhin wird vorteilhafterweise hierbei die Trommel-Armatur weiter geöffnet.

In der Dampfleitung wird eine Dampf-Armatur berücksichtigt, die den Dampfdurchfluss durch die Dampfleitung regeln kann. Sollte die Netzfrequenz sinken, wird die Trommel-Armatur weiter geöffnet. Damit sinkt der Druck in der Trommel und für eine gewisse Zeit steigt der Dampfmassenstrom aus der Trommel an, was als Ausspeichern bezeichnet werden könnte.

Dieser zusätzliche Massenstrom kann in der Dampfturbine genutzt werden, um kurzfristig mehr Leistung abzugeben, um damit die Netzfrequenz zu stützen.

Die Trommel-Armatur wird über einen Druckregler angesteuert, wobei der Drucksollwert neben den Anforderungen des Kesselherstellers die Netzfrequenz berücksichtigt. Sofern die Netzfrequenz sinkt, wird der Drucksollwert proportional zur Änderung der Netzfrequenz abgesenkt.

Für den Fall, dass die Netzfrequenz ansteigt, wird die Trommel-Armatur weiter geschlossen, wodurch in der Trommel zusätzliche Energie eingespeichert wird, die damit der Dampfturbine nicht mehr zur Verfügung steht. Somit sinkt die Dampfturbinenleistung und trägt zur Absenkung der Netzfrequenz bei.

In einer vorteilhaften Weiterbildung ist die Trommel-Armatur als Regelventil ausgebildet.

Vorteilhafterweise ist die Dampf-Armatur als Regelventil oder als Regel-Klappe ausgebildet.

Erfindungsgemäß kann somit die Dampfturbine an der Frequenzstützung bzw. Frequenzregelung in einem GuD-Kraftwerk durch Nutzung der Trommel-Armatur beteiligt werden. Im Dampferzeuger werden üblicherweise verschiedene Trommeln eingesetzt, die als Hochdruck-, Mitteldruck-, und/oder Niederdruck-Trommel bezeichnet werden können. Die Erfindung kann für die Hochdruck-Trommel, Mitteldruck-Trommel und Niederdruck-Trommel eingesetzt werden. Dadurch kann eine höhere Flexibilität des GuD-Kraftwerks erreicht werden.

Erfindungsgemäß kann die Dampfturbine weiterhin mit voll geöffneten Regel-Ventilen betrieben werden, was somit nur eine geringfügige Beeinflussung des Wirkungsgrades aufweist.

Ein Vorteil der Erfindung ist, dass durch die Aufschaltung der Frequenzabweichung auf den Drucksollwert ein schnelles und direktes Ansprechen auf die Netzfrequenzänderungen erfolgt.

Die oben beschriebenen Eigenschaften, Merkmale und Vorteile dieser Erfindung sowie die Art und Weise, wie diese erreicht werden, werden klarer und deutlich verständlich im Zusammenhang mit der folgenden Beschreibung der Ausführungsbeispiele, die im Zusammenhang mit den Zeichnungen näher erläutert werden. Die Erfindung wird nun anhand eines Ausführungsbeispiels näher erläutert.

Es zeigt die
- Figur: eine schematische Darstellung eines Teils einer Dampfkraftanlage.

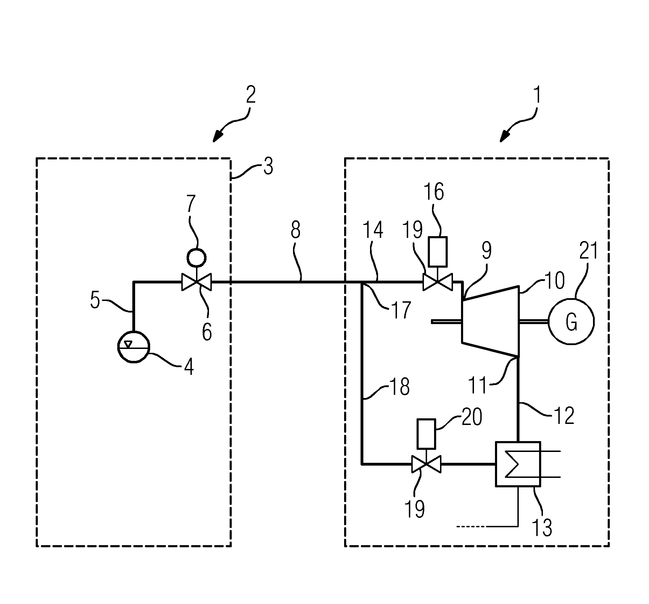

In der Figur ist ein Teilausschnitt einer Dampfkraftanlage 1 gezeigt. Dieses Dampfkraftwerk 1 kann ein reines Dampfkraftwerk 1 sein oder ein GuD-Kraftwerk, bei der eine Gasturbine für die Erzeugung des heißen Dampfes für die Dampfturbine 10 sorgt. Im Wesentlichen umfasst die Dampfkraftanlage 1 einen Dampferzeuger 2, der durch eine gestrichelte Linie 3 dargestellt ist. Der Übersichtlichkeit wegen wurden Leitungen und Rohre nicht dargestellt. Der Dampferzeuger 2 umfasst eine Trommel 4, die zum Trennen von Dampf und Wasser ausgebildet ist. Die Trommel 4 kann eine Hochdruck-, Mitteldruck- oder Niederdruck-Trommel sein. Über eine erste Leitung 5 gelangt ein Dampf zu einer Trommel-Armatur 6. Die Trommel-Armatur 6 kann ein Ventil, eine Klappe oder ein Schieber oder ähnliche Bauteile sein. Die Trommel-Armatur 6 weist eine Regeleinheit 7 auf. Die Regeleinheit 7 ist dazu ausgebildet, die Trommel-Armatur 6 anzusteuern und den Durchfluss durch die erste Leitung 5 zu regeln. Nach Durchströmen des Dampfes durch die Trommel-Armatur 6 strömt der Dampf durch eine Dampfleitung 8 über einen Dampfeinlass 9 in eine Dampfturbine 10. Die Dampfturbine 10 kann eine Hochdruck-, Mitteldruck- oder Niederdruck-Teilturbine sein. In der Dampfturbine 10 wird die thermische Energie des im Dampferzeuger 2 erzeugten Dampfes in Rotationsenergie des Rotors umgewandelt und gelangt über einen Dampfauslass 11 und einer Auslassleitung 12 zu einem Kondensator 13, der dazu ausgebildet ist, den abgekühlten Dampf wieder in Wasser zu kondensieren.

Das somit entstandene Wasser wird in einem weiteren nicht näher dargestellten Wasserdampfkreislauf wieder zu Dampf umgewandelt. Die Dampfleitung 8 mündet in eine Frischdampfleitung 14, in der eine Dampf-Armatur 15 angeordnet ist. Diese Dampf-Armatur 15 kann ein Ventil, ein Schieber oder/und eine Klappe oder ähnliches sein. Die Dampf-Armatur 15 weist eine Regeleinheit 16 auf, die dazu ausgebildet ist, die Dampf-Armatur 15 anzusteuern und den Durchfluss durch die Frischdampfleitung 14 zu regeln.

In der Dampfleitung 8 ist eine Abzweigung 17 zu einer Bypassleitung 18 ausgebildet. In der Bypassleitung 18 ist eine Bypass-Armatur 19 mit einer weiteren Regeleinheit 20 angeordnet. Über die Bypass-Armatur 19 wird der Durchfluss des Dampfes durch die Bypassleitung 18 geregelt. Die Regeleinheit 20 ist dazu ausgebildet, den Durchfluss durch die Bypassleitung 18 mittels der Bypass-Armatur 19 zu regeln. Die Bypass-Armatur 19 kann ein Ventil, ein Schieber oder/und eine Klappe oder ähnliches sein. Der Dampf in der Bypassleitung 18 strömt direkt in den Kondensator 13.

Während des Betriebes der Dampfkraftanlage 1 wird die Trommel 4 zur Frequenzstützung bzw. Frequenzregelung eines an der Dampfturbine 10 drehmomentübertragend gekoppelten Generator 21 eingesetzt. Dazu dient die Trommel-Armatur 6, die bei einer sinkenden Netzfrequenz weiter geöffnet wird, wodurch der Druck in der Trommel 4 für eine bestimmte Zeit sinkt. Dadurch steigt der Dampfmassenstrom aus der Trommel 4 an. Dieser zusätzliche Massenstrom kann in der Dampfturbine 10 genutzt werden, um kurzfristig mehr Leistung abzugeben und damit die Netzfrequenz zu stützen.

Die Regeleinheit 7 regelt die Trommel-Armatur 6. Der in der Regeleinheit 7 eingesetzte Drucksollwert berücksichtigt neben den Anforderungen des Kesselherstellers die Netzfrequenz. Sollte die Netzfrequenz sinken, wird der Drucksollwert proportional zur Änderung der Netzfrequenz abgesenkt.

Im anderen Betriebsfall, bei dem die Netzfrequenz ansteigt, wird die Trommel-Armatur 6 weiter geschlossen, wodurch in der Trommel-Armatur 6 zusätzliche Energie gespeichert wird, die der Dampfturbine 10 nicht mehr zur Verfügung steht. Dadurch sinkt die Dampfturbinenleistung und dies trägt zur Absenkung der Netzfrequenz bei.

Obwohl die Erfindung im Detail durch das bevorzugte Ausführungsbeispiel näher illustriert und beschreiben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben einer Dampfkraftanlage (1) umfassend einen Dampferzeuger (2) mit einer Trommel-Armatur (6) und einer Trommel (4),
wobei ein aus der Trommel (4) ausströmender Dampf in einer Dampfleitung (8), in der die Trommel-Armatur (6) angeordnet wird, einer Dampfturbine (10) zugeführt wird,
wobei die Trommel-Armatur (6) zum Regeln ausgebildet und im Dampferzeuger (2) nach der Trommel (4) angeordnet wird.

2. Verfahren nach Anspruch 1,
wobei über die Trommel-Armatur (6) der Druck in der Trommel (4) geregelt wird.

3. Verfahren nach Anspruch 1 oder 2,
wobei in der Dampfleitung (8) eine weitere Dampf-Armatur (15) vor der Dampfturbine angeordnet wird.

4. Verfahren nach Anspruch 3,
wobei die Dampf-Armatur (15) zum Regeln des Durchflusses des Dampfes zur Dampfturbine (10) ausgebildet ist.

5. Verfahren nach Anspruch 4,
wobei ein Generator (21) an die Dampfturbine (10) angeschlossen wird und elektrische Energie mit einer Netzfrequenz erzeugt,
wobei die Dampfturbine bei komplett geöffneter Dampf-Armatur (15) betrieben wird,
wobei die Trommel-Armatur (6) weiter geöffnet wird, sofern die Netzfrequenz sinkt.

6. Verfahren nach Anspruch 5,
wobei der Drucksollwert der Druck-Regelung verringert wird, wenn die Netzfrequenz sinkt.

7. Verfahren nach Anspruch 6,
wobei die Trommel-Armatur (6) weiter geöffnet wird.

8. Verfahren nach Anspruch 4,
wobei ein Generator (21) an die Dampfturbine (10) angeschlossen und eine elektrische Energie mit einer Netzfrequenz erzeugt wird,
wobei der Drucksollwert der Druck-Regelung vergrößert wird, wenn die Netzfrequenz steigt.

9. Verfahren nach Anspruch 8,
wobei die Trommel-Armatur (6) weiter geschlossen wird.

10. Verfahren nach einem der vorhergehenden Ansprüche, wobei die Trommel-Armatur (6) als ein Regelventil ausgebildet wird.

11. Verfahren nach einem der vorhergehenden Ansprüche, wobei die Dampf-Armatur (15) als Regelventil oder als Regel-Klappe ausgebildet ist.

12. Dampfkraftanlage (1)
umfassend einen Dampferzeuger (2), in der eine Trommel-Armatur (6) zum Regeln des Drucks in einer Trommel (4) angeordnet ist,
wobei von der Trommel (4) über eine Dampfleitung (8) eine strömungstechnische Verbindung zu einer Dampfturbine (10) entsteht und in der Dampfleitung (8) eine Dampf-Armatur (15) zum Regeln des Durchflusses durch die Armatur angeordnet ist.
